# DEMANDE DE BREVET EUROPEEN

(11) **EP 1 728 684 A1**
(43) Date de publication de la demande: **06.12.2006**
(21) Numéro de dépôt: 06300473.3
(22) Date de dépôt: 16.05.2006
(51) Int. Cl.: B60R 5/04

(54) **Dispositif elevateur pour coffre de vehicule automobile**

(30) Priorité: 31.05.2005 FR 0551420
(71) Demandeur: PEUGEOT CITROËN AUTOMOBILES S.A., 78140 Velizy Villacoublay (FR)
(72) Inventeur: Verdier, Laurent, 9 Rue Sophie Germain 75014, Paris (FR)

(57) **Abrégé**

Dispositif de compartimentage, comportant un plateau d'appui élévateur (7) épousant sensiblement le profil de la surface du fond (6) d'un coffre (2) de véhicule automobile, dont les côtés latéraux (17) sont supportés par deux glissières (8) parallèles et identiques, disposées en regard et s'étendant dans des plans verticaux, depuis le fond du coffre en direction de sa partie supérieure, caractérisé en ce que chaque glissière (8) présente un profil en zigzag, comportant des parties horizontales (10) superposées, raccordées par des éléments de liaison inclinés (11), le plateau présentant une extension formant came de maintien, engagée dans cette glissière pour assurer le guidage du plateau selon la direction des parties horizontales et des éléments inclinés selon le cas.

## Description

La présente invention est relative à un dispositif de compartimentage, permettant de lever ou d'abaisser à la volonté de l'utilisateur le fond d'un coffre de véhicule automobile, notamment pour soulever ou faire descendre un plateau apte à porter des charges ou objets divers reposant sur celui-ci, soit pour les présenter à hauteur appropriée au-dessus de l'ouverture du coffre afin d'en faciliter, dans cette position, la préhension et la manutention, soit pour amener ce plateau dans la partie basse du coffre, voire en toute autre position intermédiaire déterminée.

On connaît déjà diverses réalisations d'un dispositif élévateur de ce genre, susceptible d'être monté à l'intérieur du coffre d'un véhicule automobile et qui répond à cet objectif, comme notamment ceux décrits et représentés dans les brevets US 4.725.783, 4.969.793, 5.301.992 ou 6.290.277. Ces documents se rapportent en règle générale à des mécanismes élévateurs pour des plateaux porteurs, associés à des compas, leviers pivotants ou embiellages divers, commandés manuellement ou de préférence par des moyens moteurs actionnant un ensemble à roue-vis tangente ou à engrenages.

Ces dispositifs sont complexes dans leur réalisation mécanique, onéreux en raison du nombre de pièces nécessaires pour leur fabrication et d'un usage peu commode du fait des manoeuvres à effectuer, de sorte que leur intérêt pratique est limité et que leur fiabilité laisse à désirer au cours de la durée de vie du véhicule.

La présente invention concerne un dispositif de ce genre mais dont la structure présente une très grande simplicité d'un point de vue mécanique, ne nécessitant aucune chaîne de transmission ni de moyens moteurs pour l'entraînement du plateau de support en vue de soulever ou d'abaisser ce dernier, ses mouvements vers le haut du coffre ou vers le fond de celui-ci étant réalisés par une simple action manuelle sur le plateau pour le déplacer entre plusieurs positions superposées dans chacune desquelles il peut être aisément immobilisé.

A cet effet, le dispositif de compartimentage considéré, comportant un plateau d'appui élévateur épousant sensiblement le profil de la surface du fond d'un coffre de véhicule automobile, dont les côtés latéraux sont supportés par deux glissières parallèles et identiques, disposées en regard et s'étendant dans des plans verticaux, depuis le fond du coffre en direction de sa partie supérieure, se caractérise en ce que chaque glissière présente un profil en zigzag, comportant des parties horizontales superposées, s'étendant sensiblement parallèlement à l'axe longitudinal du véhicule, ces parties horizontales étant raccordées par des éléments de liaison inclinés, disposés entre une extrémité de chaque partie horizontale et l'extrémité opposée de la partie suivante, superposée à la précédente dans la glissière, celle-ci étant ouverte en direction de sa face latérale placée en regard du côté du plateau qui comporte une extension formant came de maintien, engagée dans cette glissière par cette face pour assurer le guidage du plateau selon la direction des parties horizontales et des éléments inclinés selon le cas, la glissière comportant en outre, dans la zone de raccordement de chaque partie horizontale avec un élément incliné, un évidement transversal permettant à un téton cylindrique, porté latéralement par la came à l'opposé du côté du plateau, d'autoriser le pivotement de celui-ci selon l'angle défini par la partie horizontale et l'élément incliné de liaison afin de disposer la came respectivement selon la direction de l'une ou de l'autre pour permettre le déplacement du plateau vis-à-vis de la glissière.

Dans un mode de réalisation préféré mais non exclusif du dispositif considéré, chaque glissière présente une section droite à profil rectangulaire, la came engagée dans la glissière par sa face latérale ouverte ayant la forme d'une barrette parallélépipédique allongée, en saillie latérale par rapport au plan du plateau et dont la hauteur est sensiblement égale à la profondeur de la glissière.

Selon une caractéristique particulière, chaque glissière comporte, au droit de l'évidement dans la zone de raccordement d'une partie horizontale et d'un élément incliné de cette glissière, un logement latéral apte à recevoir le téton cylindrique de la came solidaire du côté du plateau, pour autoriser le pivotement de celui-ci de la direction de l'élément incliné à celle de la partie horizontale ou vice-versa.

De préférence, chaque glissière comporte trois parties horizontales superposées, disposées respectivement au voisinage du fond du coffre, à une hauteur intermédiaire correspondant sensiblement à la zone d'affleurement vers l'extérieur de l'ouverture du coffre et à une hauteur maximale, au-dessus de cette ouverture.

Selon une autre caractéristique, l'évidement de chaque glissière dans la zone de raccordement, comporte un retour disposé dans le prolongement de l'élément incliné, propre à recevoir la came de maintien pour bloquer le plateau en position parallèle à la direction de cette partie inclinée, en libérant l'accès à l'intérieur du coffre.

Selon encore une autre caractéristique, la partie horizontale de chaque glissière située à la hauteur maximale comporte une extension dirigée vers l'arrière du véhicule, permettant de disposer le plateau en porte-à-faux, à l'extérieur du coffre.

Avantageusement, le plateau comporte une béquille escamotable pour assurer son soutien dans cette dernière position.

D'autres caractéristiques d'un dispositif élévateur pour plateau de fond de coffre d'un véhicule automobile apparaîtront encore à travers la description qui suit d'un exemple de réalisation, donné à titre indicatif et non limitatif, en référence aux dessins annexés, sur lesquels :
- La Figure 1 est une vue en perspective de la partie arrière d'un véhicule automobile dont le coffre, représenté ouvert, comporte un dispositif élévateur conforme à l'invention.
- La Figure 2 est une vue de côté, à plus grande échelle, d'une glissière latérale du dispositif considéré.
- La Figure 3 est une vue, à encore plus grande échelle, d'un détail de la glissière au droit du raccordement d'une partie horizontale et d'une partie inclinée de celle-ci.
- La Figure 4 est une vue extérieure d'une fraction de la glissière.
- La Figure 5 illustre, en vue perspective, la came de maintien montée sur le côté du plateau pour permettre le guidage de celui-ci dans la glissière.

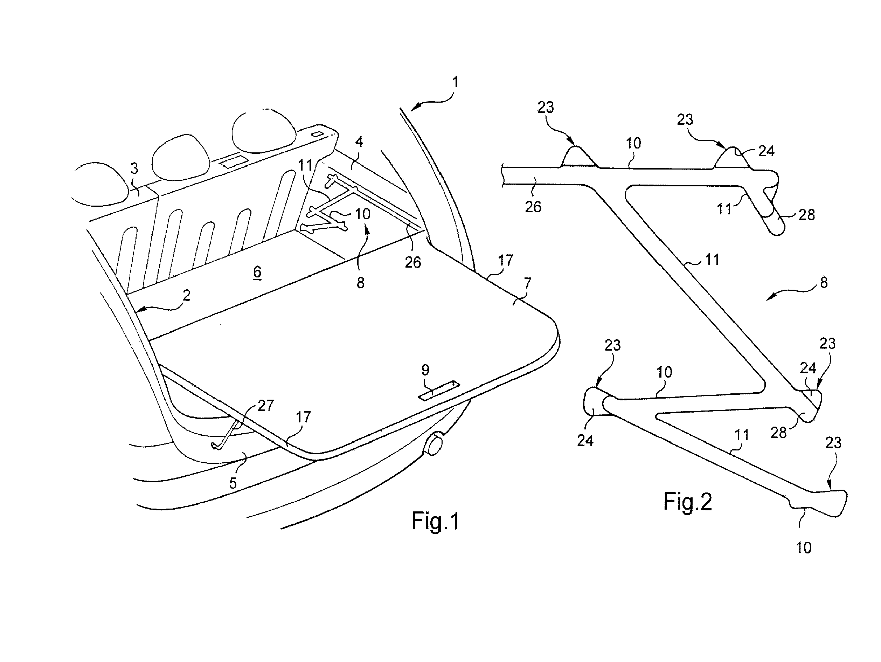

Sur la Figure 1, la référence 1 désigne de façon générale la partie arrière de l'habitacle d'un véhicule automobile très schématiquement représenté, avec le coffre 2 de ce dernier figuré ouvert, le volume de ce coffre étant délimité vers l'avant par le dossier transversal 3 de la banquette arrière du véhicule, sur ses côtés par des parois planes 4, parallèles l'une à l'autre et qui s'étendent sensiblement dans des plans verticaux selon la direction de l'axe de ce véhicule, et enfin par le bord arrière 5 de la carrosserie, lui-même parallèle à la direction du dossier 3 et sur lequel s'applique le couvercle ou élément de fermeture du coffre (non représenté), cet élément étant articulé sur l'habitacle à sa partie supérieure pour permettre de le relever et d'accéder ainsi à l'intérieur du coffre selon une disposition parfaitement classique dans la technique et qu'il n'est pas nécessaire de décrire ici plus en détail.

Le coffre 2 ainsi délimité, comportant comme il est usuel un garnissage interne dont la nature et la réalisation sont indifférentes à la présente invention, comprend un fond horizontal 6, dont le profil extérieur qui correspond à celui de la surface délimitée par le dossier 3, les côtés 4 et le bord 5, est sensiblement rectangulaire et apte à recevoir un plateau d'appui 7, lequel repose normalement contre le fond 6 mais peut être aisément élevé ou abaissé ensuite pour revenir en position initiale afin notamment de faciliter l'enlèvement ou la mise en place dans le coffre de charges quelconques (colis, bagages ou autres), reposant sur ce plateau.

Dans ce but et conformément à l'invention, le plateau d'appui 7 est aménagé pour coopérer avec des glissières latérales 8, identiques l'une à l'autre, prévues dans les faces parallèles en regard des côtés latéraux 4 du coffre 2, ces glissières 8, dont une seulement apparaît sur la Figure 1, étant aménagées pour maintenir et guider le plateau 7 et lui permettre d'occuper plusieurs positions successives, étagées selon la profondeur du coffre entre le fond 6 de celui-ci et une position extrême dans laquelle le plateau est disposé au-dessus du bord 5 du coffre en permettant d'accéder aisément aux charges reposant sur ce plateau.

Le plateau d'appui 7 comporte avantageusement une poignée de manoeuvre 9 ou analogue, prévue dans sa partie arrière, permettant à l'utilisateur de saisir aisément ce plateau pour le lever ou l'abaisser, en lui faisant décrire le profil particulier de ses glissières latérales 8, plus spécialement illustrées sur les Figures 2 à 4.

La Figure 2 illustre, en vue de côté et à plus grande échelle, une des deux glissières 8 du dispositif élévateur conforme à l'invention.

Cette glissière 8, qui présente de préférence une section droite rectangulaire, comporte un profil général en zigzag, formé de parties horizontales 10 et d'éléments de liaison inclinés 11, chacun de ces derniers étant sensiblement disposé entre une extrémité d'une partie horizontale et l'extrémité opposée de la partie suivante.

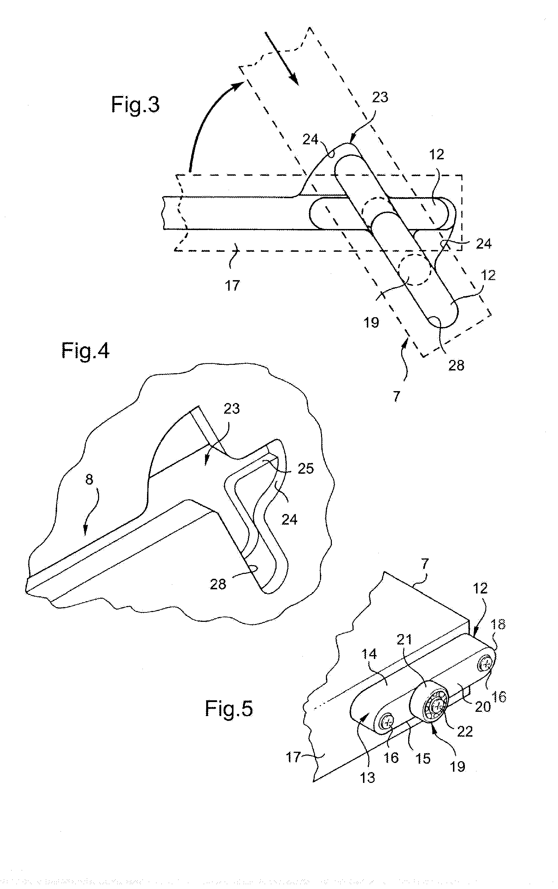

Chaque glissière 8 est ouverte dans sa face latérale qui est disposée en regard du côté correspondant du plateau d'appui 7, de telle sorte que ce dernier puisse être maintenu et guidé par rapport à cette glissière au moyen d'une came 12, dont la Figure 5 illustre, à plus grande échelle, le détail de la réalisation.

La came 12 comporte notamment un corps allongé en forme de barrette parallélépipédique 13, dont la hauteur, délimitée par des flancs 14 et 15, parallèles au plan du plateau 7, correspond sensiblement à la largeur de la glissière à section rectangulaire 8 dans ses parties horizontales 10 et ses éléments de liaison inclinés 11, et dont la hauteur est égale à la profondeur de cette même glissière, de sorte que la came ainsi constituée puisse se déplacer dans la glissière, en maintenant et guidant en permanence le plateau d'appui 7, qui reste horizontal lorsque la came parcourt une partie 10 et est basculé lorsque la came se déplace dans un élément incliné 11.

Le corps 13 de la came 12 est fixé par des vis 16 contre le bord 17 du plateau 7, qui comporte par conséquent deux cames identiques, coopérant simultanément avec les deux glissières 8 en regard, portées par les côtés latéraux 4 du coffre.

Avantageusement, le corps 13 la came présente à ses extrémités avant et arrière, à l'intérieur de la glissière correspondante, un profil de raccordement 18 arrondi entre ses flancs 14 et 15, afin de faciliter son déplacement relatif avec le plateau par rapport à cette glissière et permettre notamment d'accommoder aisément les changements de direction imposés.

Pour réaliser ces derniers, la came 12 comprend un téton cylindrique 19, porté par la face 20 du corps 13 opposée à celle qui est appliqué contre le bord 17 du plateau d'appui 7, ce téton comprenant avantageusement un roulement à billes 21 pouvant librement tourner autour d'un axe 22, solidaire de la face 20 et s'étendant vers l'extérieur du plateau, perpendiculairement à celle-ci.

Dans chacune des glissières 8, la zone de raccordement 23 d'une partie horizontale 10 et d'un élément incliné 11 est spécialement aménagée pour former une sorte d'aiguillage permettant au plateau 7 de pivoter sur lui-même pour passer d'une position horizontale où la came 12 portée par le côté 17 du plateau d'appui 7 en regard de cette glissière, est engagée dans la partie 10, à une position inclinée où cette même came est amenée dans l'élément 11, ou vice-versa.

Dans ce but, la glissière 8 comporte dans cette zone de raccordement 23 un évidement transversal 24, représenté en coupe sur la Figure 3 et en vue extérieure sur la Figure 4, dont le profil est aménagé de sorte que la barrette 13 formant la came 12 portée par le côté 17 du plateau d'appui 7 comme décrit précédemment, puisse tourner sur elle-même pour passer de l'une à l'autre des deux positions précitées, le pivotement du plateau et de la came qui en est solidaire s'effectuant autour du téton 19 à l'intérieur d'un logement latéral 25 prévu en saillie externe sur la glissière 8 par rapport à la partie horizontale 10 et à l'élément incliné 11 aboutissant à la zone de raccordement 23 considérée, et dans lequel s'engage le téton 19 au droit de cette zone.

Dans l'exemple de réalisation représenté, chaque glissière 8 comporte trois parties horizontales 10 superposées, raccordées de l'une à l'autre par deux éléments inclinés 11, ces parties horizontales permettant de disposer le plateau d'appui 7, respectivement contre le fond 6 du coffre, à une hauteur intermédiaire correspondant sensiblement à la zone d'affleurement vers l'extérieur de l'ouverture du coffre 2 au-dessus du bord arrière 5 de celui-ci, et à une hauteur maximale au-dessus de cette ouverture comme illustré sur la Figure 1.

Dans cette dernière position, la partie horizontale 10 comporte avantageusement une extension 26 dirigée vers l'arrière du véhicule (voir Figure 1), permettant de faire glisser le plateau d'appui 7 à l'extérieur du coffre 2 pour le disposer en porte-à-faux hors de celui-ci et faciliter la mise en place ou le retrait des charges qu'il supporte. Dans cette position, où le plateau 7 peut notamment jouer le rôle d'une table pour pique-nique par exemple, il est utilement associé à une béquille escamotable 27, propre à le soutenir au-dessus du bord 5 et éviter qu'un effort de flexion excessif sur les glissières 8 par l'intermédiaire des cames 12 de maintien de ce plateau.

Chaque élément incliné 11 des glissières 8 peut par ailleurs comporter un retour 28, disposé dans le prolongement de cet élément afin de recevoir la came 12 qui, dans cette position où elle vient buter contre le fond de ce retour, permet de bloquer le plateau en le maintenant parallèle à la direction de l'élément dans le but de libérer momentanément l'accès à l'intérieur du coffre 2, le plateau pouvant ensuite reprendre ses déplacements par rapport à la glissière, par simple retrait de la came hors de ce retour 28.

On réalise ainsi un dispositif élévateur pour coffre de véhicule automobile, de conception très simple et qui n'exige pour sa mise en oeuvre aucun moyen motorisé du genre de ceux déjà connus et proposés dans la technique. Ce dispositif est peu coûteux et peut facilement constituer un accessoire prévu sur le véhicule en première monte ou le cas échéant à adapter sans difficultés de mise en place particulière dans un coffre qui en est dépourvu.

La forme particulière des deux glissières et notamment le nombre des positions horizontales superposées du plateau d'appui peut être différent d'un mode de réalisation à l'autre, selon les besoins de l'utilisateur.

Il en résulte que l'invention n'est pas limitée à l'exemple d'exécution plus spécialement décrit et représenté ; elle en embrasse au contraire toutes les variantes entrant dans le champ des revendications qui suivent.

Notamment, pour un véhicule dont le bord arrière du coffre forme, à la base du hayon ou panneau arrière qui ouvre ou ferme ce coffre en étant articulé sur le dessus de la carrosserie, un volet fixe ou éventuellement rabattable, on peut prévoir que, dans une des positions qu'il occupe conformément à ce qui a été décrit dans ce qui précède, grâce à la mise en oeuvre des moyens de l'invention, le plateau puisse être verrouillé sur la partie supérieure de ce bord à l'aide d'une serrure ou autre, afin de fermer, à l'intérieur du coffre, un espace clos en principe inaccessible à quiconque ne dispose pas de la clef d'ouverture de cette serrure.

## Revendications

1. Dispositif de compartimentage, comportant un plateau d'appui élévateur (7) épousant sensiblement le profil de la surface du fond (6) d'un coffre (2) de véhicule automobile, dont les côtés latéraux (17) sont supportés par deux glissières (8) parallèles et identiques, disposées en regard et s'étendant dans des plans verticaux, depuis le fond du coffre en direction de sa partie supérieure, **caractérisé en ce que** chaque glissière (8) présente un profil en zigzag, comportant des parties horizontales (10) superposées, s'étendant sensiblement parallèlement à l'axe longitudinal du véhicule, ces parties horizontales étant raccordées par des éléments de liaison inclinés (11), disposés entre une extrémité de chaque partie horizontale et l'extrémité opposée de la partie suivante, superposée à la précédente dans la glissière, celle-ci étant ouverte en direction de sa face latérale placée en regard du côté (17) du plateau qui comporte une extension formant came de maintien (12), engagée dans cette glissière par cette face pour assurer le guidage du plateau selon la direction des parties horizontales et des éléments inclinés selon le cas, la glissière comportant en outre, dans la zone de raccordement (23) de chaque partie horizontale (10) avec un élément incliné (11), un évidement (24) permettant à un téton cylindrique (19), porté latéralement par la came (12) à l'opposé du côté du plateau (7), d'autoriser le pivotement de celui-ci selon l'angle défini par la partie horizontale et l'élément incliné de liaison afin de disposer la came respectivement selon la direction de l'une ou de l'autre pour permettre le déplacement du plateau dans la glissière (8).

2. Dispositif selon la revendication 1, **caractérisé en ce que** chaque glissière (8) présente une section droite à profil rectangulaire, la came (12) engagée dans la glissière par sa face latérale ouverte ayant la forme d'une barrette parallélépipédique (13) allongée, en saillie latérale par rapport au plan du plateau (7) et dont la hauteur est sensiblement égale à la profondeur de la glissière.

3. Dispositif selon l'une des revendications 1 ou 2, **caractérisé en ce que** chaque glissière (8) comporte, au droit de l'évidement (24) dans la zone de raccordement (23) d'une partie horizontale (10) et d'un élément incliné (11) de cette glissière, un logement latéral (25) apte à recevoir le téton cylindrique (19) de la came (12) solidaire du côté du plateau (7), pour autoriser le pivotement de celui-ci de la direction de l'élément incliné à celle de la partie horizontale ou vice versa.

4. Dispositif selon l'une quelconque des revendications 1 à 3, **caractérisé en ce que** chaque glissière (8) comporte trois parties horizontales (10) superposées, disposées respectivement au voisinage du fond (6) du coffre (2), à une hauteur intermédiaire correspondant sensiblement à la zone d'affleurement vers l'extérieur de l'ouverture du coffre et à une hauteur maximale, au-dessus de cette ouverture.

5. Dispositif selon l'une quelconque des revendications 1 à 4, **caractérisé en ce que** l'évidement (24) de chaque glissière (8) dans la zone de raccordement (23), comporte un retour (28) disposé dans le prolongement de l'élément incliné (11), propre à recevoir la came de maintien (12) pour bloquer le plateau (7) en position parallèle à la direction de cette partie inclinée, en libérant l'accès à l'intérieur du coffre (2).

6. Dispositif selon l'une des revendications 4 ou 5, **caractérisé en ce que** la partie horizontale (10) de chaque glissière (8) située à la hauteur maximale comporte une extension (26) ouverte, dirigée vers l'arrière du véhicule, permettant de disposer le plateau (7) en porte-à-faux à l'extérieur du coffre.

7. Dispositif selon la revendication 6, **caractérisé en ce que** le plateau (7) comporte une béquille escamotable (27) pour assurer son soutien dans sa position en porte-à-faux.

8. Dispositif selon l'une quelconque des revendications 1 à 7, **caractérisé en ce que** le plateau d'appui (7) comporte une poignée de manoeuvre (9) ou analogue, prévue dans sa partie arrière, permettant à l'utilisateur de saisir aisément ce plateau pour le lever ou l'abaisser, en lui faisant décrire le profil de ses glissières latérales (8).
